# EUROPEAN PATENT APPLICATION

(11) **EP 1 892 634 A1**
(43) Date of publication of application: **27.02.2008**
(21) Application number: 06017661.7
(22) Date of filing: 24.08.2006
(51) Int. Cl.: G06F 17/30

(54) **Method and system for retrieving data from a web service provider**

(71) Applicant: SIEMENS AKTIENGESELLSCHAFT, 80333 München (DE)
(72) Inventor: Grimminger, Jochen, 80638 München (DE); Zaid, Farid, 84539 München (DE)

(57) **Abstract**

A system to retrieving data from a web service provider (2), wherein a client computer (4) invokes a web service from a server of a web service provider (2) via a data network (3) to retrieve data which are transmitted from said server via said network (3) to said client computer (4) along with meta data indicating an effect relation of said retrieved data.

## Description

Web services provide means for interoperation between different applications running on a variety of platforms and frameworks.

### BACKGROUND OF THE INVENTION

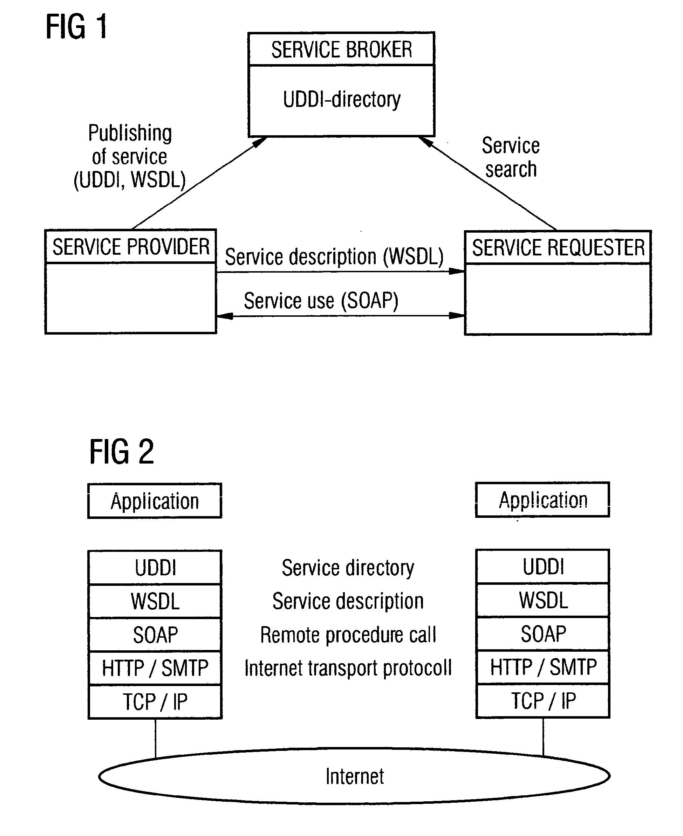

Figure 1 illustrates an interaction of a service provider, a service broker and a service requestor over a network when using web services. A service provider describes his service by means of the web service descriptor using WSDL. This description of his service is published by storing the WDSL web service descriptor in a public UDDI directory (UDDI: Universal Description Discovery and Integration) of a service broker. A service requesting user searches in the UDDI directory of the service broker for services he needs. When the user finds a service which he likes to use, he communicates directly via SOAP (Simple Object Access Protocol) with the service provider. SOAP is a protocol for exchanging XML-based messages over a computer network, such as the Internet. The most common messaging pattern of SOAP is a remote procedure call (RPC) pattern where a first network node, i. e. client, sends a request message to another node, i. e. server. The server immediately sends a response message to the client. UDDI is a platform independent, XML-based registry for service providers to list themselves on the Internet. The UDDI business registration consists of three components, i. e. so-called "White Pages" giving information about the service provider, the so-called "Yellow Pages" listing and describing the provided services and the so-called "Green Pages" giving technical information about services exposed by the service provider. UDDI is designed to be interrogated by SOAP messages and provide access to WSDL documents describing the protocol bindings and message formats required to interact with the web services listed in the UDDI directory. UDDI enables application to look up web service information in order to determine whether to use them. Software application written in various programming languages and running on various platforms can use web services to exchange data over a computer network like the Internet in a manner similar to inter-process communication on a single computer. This inter-operability, for example, between Java and Phyton, or Microsoft Windows and Linux Application, is due to the use of open standards.

Figure 2 shows a layer model of said web services. The basic layer is the TCP/IP layer followed by the Internet transport protocols HTTP/SMTP. Messages which are relevant for the application use the SAOP protocol for remote function calls being encoded in XML. Since any web service can offer different functions, WDSL provides in the next layer a description of the service for application programs. The access to the web services is made possible by use of the UDDI directories which are provided for predetermined services.

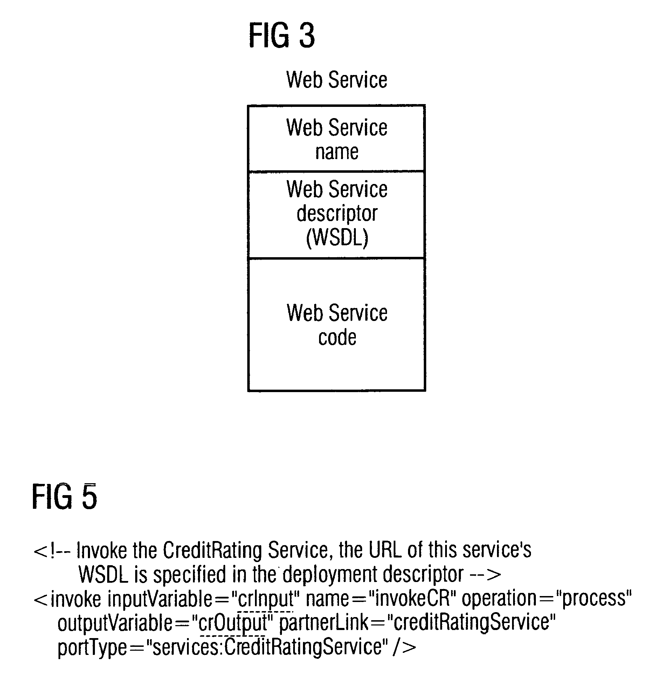

Figure 3 shows schematically a web service. A web service comprises a web service name for identifying the web service, a web service descriptor for describing the function of that web service and, finally, an executable web service programme code.

A service oriented architecture (SOA) is a software architecture, in which an application functionality is encapsulated as independent services. These services are in many cases web services. Clients in different applications or business processes can then consume these services. Service oriented architecture (SOA) de-couples the implementation for a software service from the interfaces that call the service. This lets clients of a service rely on a consistent interface regardless of the implementation technology of the service. By far the most common type of service used in a service oriented architecture (SOA) is the web service. To orchestrate a set of web services into a business process requires either writing a great deal of low level code or the use of a business process execution language (BPEL).

Figure 4 shows an example of a process defind in a business process execution language (BPEL). In the given example a BPEL process flow consists of different web services, referred to as partner links which compares loan rate values returned from the services to determine the lowest one.

Figure 5 shows an example of an invocation of a remote web service.

A disadvantage of conventional methods for retrieving data from a web service resides in that the client which retrieves data from a web service provider does not have any information as to the partners used by the web service provider. A consequence of this is that some of the invocations of the web services are unneeded or redundant, other invocations can be enacted concurrently rather than sequently while some other invocations would be blocked until the resources of the retrieved data are released.

Accordingly it is an object of the present invention to provide a method and a system which helps clients invoking a web service to enhance and optimise their processes.

### SUMMARY OF THE INVENTION

The invention provides a method for retrieving data from a web service provider, where additional meta data is retrieved, indicating an effect relation of the retrieved data.

By transmitting additional meta data along with the retrieved data it is possible to avoid redundant invocations of the web services.Furthermore invocations of web services can be made at the right time and some invocations can be parallelised.

With the method according to the present invention it is possible to resolve clashes on resources smoothly.

With the method according to the present invention the service provider provides his customers or clients with extra information such as used resources or partners.

The additional meta data transmitted along with the retrieved data does not disclose any implementation details of the web service, thus abiding to the rules and concepts of the service oriented architecture (SOA).

In one embodiment of the method according to the present invention data is retrieved from the web service by invoking a web service through a network.

In one embodiment of the method according to the present invention the web service is invoked through the SOAP-Protocol (Simple Object Access protocol).

In one embodiment of the method according to the present invention the invoked web service comprises a web service name, a web service descriptor for describing the function of said web service, and an executable web service programme code.

In one embodiment of the method according to the present invention the web service descriptor describes a function of said web service in a web service description language (WSDL) .

In one embodiment of the method according to the present invention the additional meta data indicates a source of the retrieved data.

In a further embodiment of the method according to the present invention the additional meta data indicates when the retrieved data have been updated.

In one embodiment of the method according to the present invention the additional meta data is transmitted from said web service provider to a client via a network.

In one embodiment of the method according to the present invention the additional meta data is transmitted together with the retrieved data in a data message.

In one embodiment of the method according to the present invention the data message is transmitted using a SOAP Protocol (Simple Object Access Protocol).

In a further embodiment of the method according to the present invention the additional meta data is retrieved by a client demand-based in response to an inquiry message sent by said client to said web service provider.

In an alternative embodiment the additional meta data is retrieved by a client description-based when the client has subscribed to receive additional information from that web service provider.

In a further alternative embodiment of the method according to the present invention the additional meta data is retrieved by a client SLA-based (Service Level Agreement) when the client and the web service provider have a corresponding contract.

The invention further provides a system for retrieving data from a service provider, wherein a client computer invokes a web service from a server of a web service provider via a data network to retrieve data which are transmitted from said server via that network to that client computer along with meta data indicating an effect relation of the retrieved data.

### BRIEF DESCRIPTION OF THE DRAWINGS

In the following preferred embodiments of the method and system according to the present invention are described with reference to the enclosed figures.
Figure 1 shows the interaction of a web service provider, a service broker and a service requester over a network according to the state of the art;
Figure 2 shows a conventional layer model of a web service;
Figure 3 shows a data format for a conventional web service;

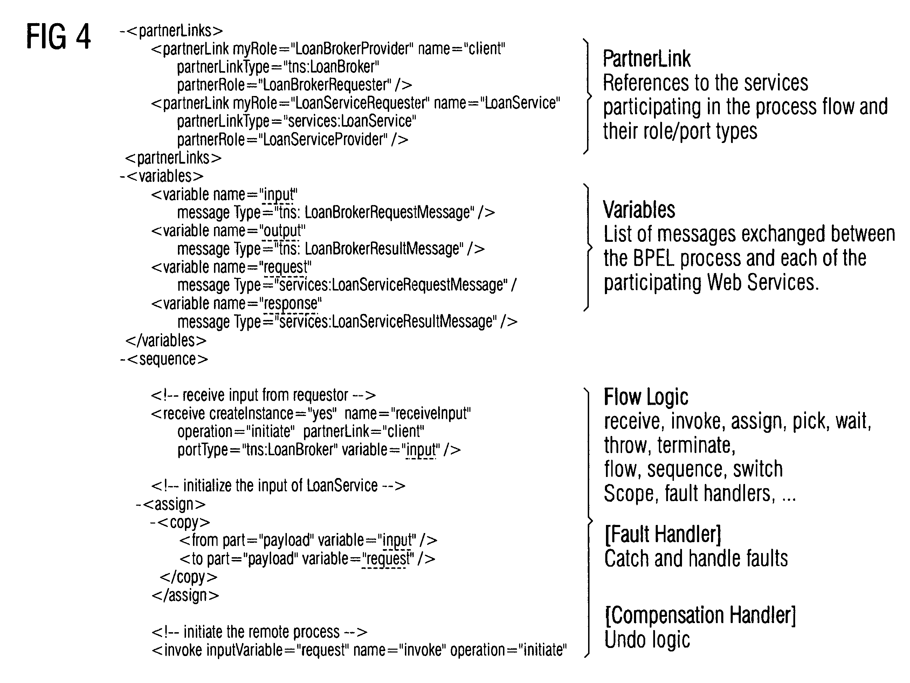

Figure 4 shows an example of a process described in BPEL language according to the state of the art;

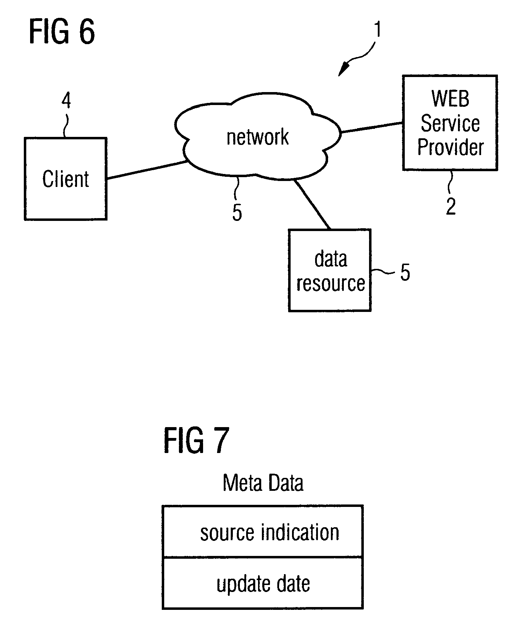

Figure 5 shows an example of the invocation of a web service according to the state of the art;
Figure 6 shows a diagram of a system for retrieving data from a web service provider according to one embodiment of the present invention;
Figure 7 shows an example of meta data which is transmitted together with the retrieved data in one embodiment of the method for retrieving data from a web service provider according to the present invention;

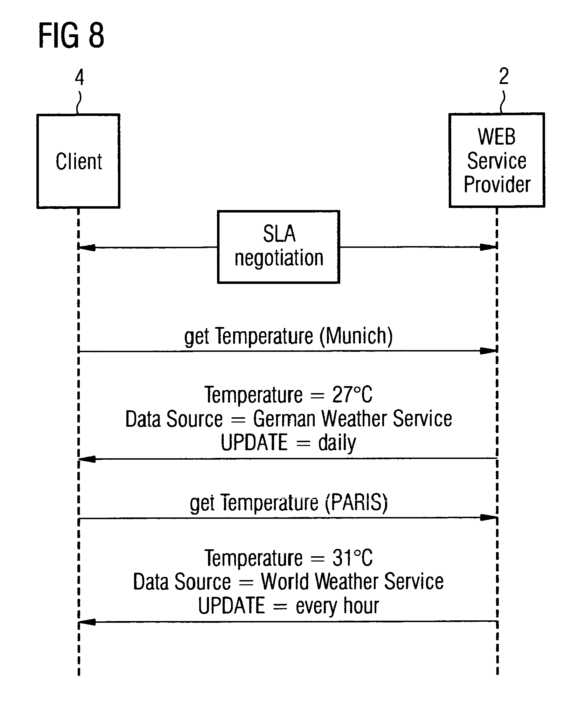

Figure 8 shows a signal diagram for illustrating an example of a message for retrieving data from a web service provider in one embodiment of the method according to the present invention.

### DETAILED DESCRIPTION OF THE INVENTION

As can be seen from figure 6 the system 1 for retrieving data from a web service provider according to the present invention comprises at least one server 2 of a web service provider which is connected a data network 3 such as the internet to which a plurality of clients 4 are connected. Further a data resource server 5 is connected to the network 3 supplying the web service provider 2 with data necessary for providing the requested web service to a client 4. The web service provider 2 describes his web service by means of a web service descriptor using WSDL. This description of the web service is published by storing the WDSL web service descriptor in a public UDDI-directory (Universal Description Discovery and Integration) of a service broker not shown in figure 6. The client 4 requesting a web service searches in the UDDI directory of a service broker for services he needs. When the client 4 finds a web service which he can use the client 4 communicates directly via SOAP with the service provider 2. The client 4 sends in one embodiment a request message to the web service provider 2. The web service provider 2 immediately sends a response message to the client 4. The client 4 invokes the desired web service by invocation this service from the remote web service provider 2 as shown for example in figure 5. The invoked web service will provide the client 4 with the desired information data. This information data is retrieved by the client 4 by invoking the web service from the web service provider 2. The retrieved information data is transmitted via the web service provider 2 by the network 3 to the client computer 4. In the method and system according to the present invention the web service provider 2 does not only send the desired information data but also meta data indicating an effect relation of the retrieved data. These effect relation data provides the client 4 with extra information such as which resources or partners are effected by this invocation of the web service and for how long. The additional effect relation data does not describe an implementation detail of the invoked web service. By providing client 4 with the additional effect relation data it is possible that the client 4 will decide whether the invocation is unneeded or redundant. The client 4 can optimise his process on the basis of the transmitted effect relation data. It is possible for the client 4 to parallelise different invocations to different web service providers 2 and to resolve clashes on a data resource 5. Furthermore, the client 4 can parallelise some invocations to different web services to speed up the process.

In a preferred embodiment of the system and method according to the present invention the effect relation data is sent as meta data indicating an effect relation along with the retrieved data via the data network to the client computer 4.

In a possible embodiment the effect relation data indicates a trustworthiness of the retrieved data. Figure 7 shows an example of meta data indicating a trustworthiness of the retrieved data. The trustworthiness of the retrieved data maybe indicated by data indicating sources of the retrieved data and by data indicating when the retrieved data were updated, i.e. and indicating how actual the retrieved data are. Additional data is transmitted in a preferred embodiment using a SOAP-Protocol (Simple Object Access Protocol).

In a first embodiment additional meta data is retrieved by a client 4 demand-based in response to an inquiry message sent by said client 4 to said web service provider 2 via the data network 3. In this way the client 4 can get the information according to his needs on a irregular basis. To facilitate this demand-based retrieval of data the web service provider 2 exposes some special operations in his WDSL interface through which he authorised partners can obtain the effect relation data. Traditional methods like email can be used for this purpose as well.

In a further alternative embodiment of the method according to the present invention the additional meta data is retrieved by the client 4 subscription-based when the client 4 has subscribed to receive additional information from that web service provider 2. Following a subscribe-notify pattern the clients 4 can subscribe themselves to some additional meta data. Upon availability or update of the meta data the subscribers or clients 4 will be notified accordingly via SOAP or email etc.

In a still further alternative embodiment the additional meta data is retrieved by the client 4 SLA (Service Level Agreement) based when the client 4 and the web service provider 2 have a corresponding contract. The SLA-based retrieval of data benefits from the extensibility of the web service level agreement framework WSLA. In a WSLA contract the web service provider 2 can commit himself to transmit additional meta data along with the retrieved data allowing the client 4 to optimise his processes. The web service provider 2 is obliged to provide effect relation data.The type, availability, price etc of such effect relation data can be contracted as well. The provision of the effect relation data along with the retrieved data is monitored by the signatory parties, e.g. the client 4 and the web service provider 2 as any other parameter in the SLA.

Figure 8 shows a signal diagram illustrating the method and system for retrieving data, from a web service provider 2 according to the present invention. In the given example a client 4 whishes to retrieve temperature data of a particular location. For instance, an event manager forming a client 4 must know the weather and temperature at different locations where he wishes to perform an event. To get this necessary information the client 4 negotiates in the given example an SLA-contract with a web service provider 2 offering the service of supplying the client 4 with the necessary information.

In the given example of figure 4 the web service provider 2 has committed himself to provide the client 4 with the necessary information, e.g. a temperature T of any location within a reaction time of 20 milliseconds. Furthermore the web service provider 2 might commit himself in the SLA-contract to provide the client 4 with additional meta data indicating an effect relation of the retrieved data such as the data source of the provided temperature data.

In the example shown in figure 8 the client 4 sends a request message to get the necessary information data such as the temperature T of Munich.

The web service provider 2 transmits the desired data (temperature = 27°C) along with additional meta data indicating an effect relation of the retrieved data. In the given example the effect relation data comprises data indicating the data source and data indicating how actual the requested temperature data is. In the given example the data source disclosed to the client 4 is the German weather service and the web service provider 2 further indicates that the temperature data is updated daily.

In the next inquiry the client sends again a request to receiving data for another location, e.g. Paris. The retrieved data indicates the temperature T along with meta data indicting an effect relation such as the data source and how actual the retrieved data is. In the given example the data source is the "world weather service" and it is indicated that the temperature data is updated every hour.

For the process implemented on the computer of the client 4 it may be very important to receive the additional meta data such as the data source and the update. For instance, a process implemented on the client computer 4 may regard some data source more reliable than the other data source. Furthermore, for some applications a daily update of the temperature may not be sufficient but an update of the temperature every hour may be sufficient for the needs of the application. Furthermore, an application run on the client computer 4 may recognise when it gets data from a data source such as the "German weather service" that other parallel applications running on the client computer 4 need the same data from the same data source. In this way it possible for the client 4 to parallelise the invocations of web services. The method and system according to the present invention can be used in any application running on a client computer 4, i.e. in any distributed computer architecture using web services. The method and system according to the present invention may be used for implementing any technical or business process described in script language such as BPEL. For instance, the method and system according to the present invention may be used for analysing biological structures e.g. genes in the field of bio-informatics.

The data network can be formed by any data network, such as the internet but also by a local-area network LAN or a wide-area network WAN.

## Claims

1. A method for retrieving data from a web service provider (2) wherein additional meta data is retrieved indicating an effect relation of said retrieved data.

2. The method according to claim 1,
wherein the data is retrieved from said web service provider by invoking a web service through a network(3).

3. The method according to claim 1,
wherein said web service is invoked using a SOAP-protocol (Simple Object Access Protocol).

4. The method according to claim 1,
Wherein said invoked web servcie comprises
a web service name,
a web service descriptor for describing a function of said web service, and
an executable web service program code.

5. The method according to claim 4,
wherein the web service descriptor describes a function of said web service in a web service description language (WSDL).

6. The method according to claim 1,
wherein the additional meta data indicates a source of the retrieved data.

7. The method according to claim 1,
wherein the additional meta data indicates when the retrieved data have been updated.

8. The method according to claim 1,
wherein the additional meta data indicates a trustworthiness of said retrieved data

9. The method according to claim 1,
wherein the additional meta data is transmitted from said web service provider to a client via a network.

10. The method according to claim 1,
wherein the additional meta data is transmitted together with the retrieved data in a data message.

11. The method according to claim 10,
wherein the data message is transmitted using a SOAP-protocol (Simple Object Access Protocol).

12. The method according to claim 1,
wherein the additional meta data is retrieved by a client subscription-based when the client has subscribed to receive additional information from said web service provider.

13. The method according to claim 1,
wherein the additional meta data is retrieved by a client subscription-based when the client has subscribed to receive additional information from said web service provider.

14. The method according to claim 1,
wherein the additional meta data is retrieved by a client SLA (Service Level Agreement) based when the client and the web service provider have a corresponding contract.

15. A system to retrieving data from a web service provider,
wherein a client computer invokes a web service from a server of a web service provider via a data network to retrieve data which are transmitted from said server via said network to said client computer along with meta data indicating an effect relation of said retrieved data.

16. The system for retrieving data from a web service provider according to claim 15,
wherein said data network is the internet.

17. The system for retrieving data from a web service provider according to claim 15,
wherein the additional meta data indicates a source of the retrieved data.

18. The system according to claim 15,
wherein the additional meta data indicates when the retrieved data have been updated.

19. The system according to claim 15,
wherein the additional meta data indicates a trustworthiness of the retrieved data.

20. The system according to claim 15,
wherein the additional meta data is retrieved by the client demand-based in response to an inquiry message sent by said client to the web service provider.

21. The system according to claim 15,
wherein the additional meta data is retrieved by the client description-based when the client has subscribed to receive additional information from the web service provider.

22. The system according to claim 15,
wherein the additional meta data is retrieved by a client SLA-based when the client and the web service provider have a corresponding contract.
